# EUROPEAN PATENT APPLICATION

(11) **EP 3 300 608 A1**
(43) Date of publication of application: **04.04.2018**
(21) Application number: 17196790.4
(22) Date of filing: 19.01.2015
(51) Int. Cl.: A23D 7/00, A23D 7/02, A23D 9/00, A21D 13/00

(54) **FAT BLEND**

(30) Priority: 21.01.2014 EP 14275012
(62) Divisional of application: 15703738.3
(71) Applicant: Loders Croklaan B.V., 1521 AZ Wormerveer (NL)
(72) Inventor: HAPPE, Randolph Peter, NL-1521 AZ Wormerveer (NL); BHAGGAN, Krishnadath, NL-1521 AZ Wormerveer (NL); VAN ROOIJEN, Christiaan, NL-1521 AZ Wormerveer (NL)
(74) Representative: Potter Clarkson LLP

(57) **Abstract**

A fat blend comprises more than 75 % by weight oleic acid at the 2- position of a glyceride based on total C8 to C24 fatty acids present as an acyl group on the 2- position of a glyceride, from 10 % to 50 % by weight stearic acid based on total C8 to C24 fatty acids present as acyl groups in glycerides in the blend, from 15 % to 45 % by weight SUS triglycerides based on total triglycerides present in the fat blend, where S represents saturated C8 to C24 fatty acid and U represents unsaturated C8 to C24 fatty acid, and less than 25 % by weight StOO triglycerides based on total triglycerides present in the fat blend, wherein St represents stearic acid and O represents oleic acid. The fat blend may be used in a margarine or spread, or as a shortening.

## Description

This invention relates to a fat blend, to a process for making the fat blend, to the use of the fat blend to prepare a margarine or spread, to the use of the fat blend as a shortening, to a method of making a margarine or spread, to a margarine or spread comprising the fat blend and to a dough comprising the fat blend and a baked product prepared from the dough.

Triglyceride fats are important components of many edible products. Fats used in the food industry are frequently provided from vegetable sources such as sunflower and palm.

Margarines and spreads are examples of food products that contain fats. They are emulsions of a fat phase and a water phase and usually contain an emulsifier. The properties of the fat contribute significantly to the overall structure of the margarine or spread, such as its hardness and mouthfeel. Margarines and spreads may be used in many applications, for example in baking and as a layer applied to bread or toast.

Shortening is another example of a food ingredient based on fats. Shortening is a fat that is used in baking and is typically a fat that has moldability at room temperature.

The desirable effect of layering that is achieved in bakery products such as puff pastry can be achieved using shortening, margarines or spreads. In this context, the fats are sometimes termed laminating fats. Puff pastry is a light, flaky pastry made from dough which contains layers of a fat. The layers of fat are usually obtained by spreading the fat on the dough, folding the dough, and rolling it out. The layered structure of the puff pastry is due at least in part to the layers of the fat. Products in which this type of structure is desirable include croissants, Danish pastries and pies.

US 8586122 discloses laminating fats comprising from about 20% to about 80% by weight of an interesterified palm oil olein, from about 5% to about 25% by weight of a liquid oil and from about 15 to about 75% by weight of a fat selected from the group consisting of palm oil stearins, interesterified palm oil stearins, palm oil oleins, fully hydrogenated oils and mixtures thereof.

EP-A-0719091 describes fats that are suitable for the manufacture of shortening and margarines and can be blends of refined shea oil and sunflower oil. The fats disclosed in this document have 75 % or less of oleic acid at the 2- position.

The present invention seeks to provide compositions that are alternatives to palm oil and its fractions for use in margarines, spreads and shortening. In particular, the invention aims to provide a fat blend that exhibits good textural properties in margarine with a reduced tendency to exhibit post-hardening (i.e., hardening of the margarine over time). The invention also aims to provide a fat blend that has a good balance of properties for dough processing including being not too hard and not lumpy, yet providing good height and structure in baked products such as pastry.

According to the present invention, there is provided a fat blend comprising more than 75 % by weight oleic acid at the 2- position of a glyceride based on total C8 to C24 fatty acids present as an acyl group on the 2- position of a glyceride, from 10 % to 50 % by weight stearic acid based on total C8 to C24 fatty acids present as acyl groups in glycerides in the blend, from 15 % to 45 % by weight SUS triglycerides based on total triglycerides present in the fat blend, where S represents saturated C8 to C24 fatty acid and U represents unsaturated C8 to C24 fatty acid, and less than 25 % by weight StOO triglycerides based on total triglycerides present in the fat blend, wherein St represents stearic acid and O represents oleic acid.

Also provided by the invention is a process for making the fat blend of the invention which comprises mixing shea stearin and high oleic sunflower oil.

In another aspect, the invention provides the use of the fat blend of the invention to prepare a margarine or spread.

In a further aspect, the invention provides the use of the fat blend of the invention as a shortening.

Also provided by the invention is a method of making a margarine or spread comprising mixing a fat blend of the invention with an aqueous liquid.

In yet another aspect, the invention provides a margarine or spread comprising from 1 to 99 % by weight of a fat phase comprising the fat blend of the invention and from 1 to 99 % by weight of an aqueous phase.

Another aspect of the invention is the use of the fat blend of the invention for reducing the post-hardening of a margarine or spread.

The invention also provides a method of making a dough comprising mixing the fat blend of the invention with one or more other dough ingredients, such as flour and water.

Also provided by the invention are a dough comprising the fat blend of the invention and a baked product prepared from the dough.

The invention further provides the use of the fat blend of the invention for improving the structure of a dough product, for example the height of puff pastry.

The term fatty acid, as used herein, refers to straight chain saturated or unsaturated (including mono-, di- and poly- unsaturated) carboxylic acids having from 8 to 24 carbon atoms. The term fat refers generally to compositions that contain a mixture of fatty acid glycerides. The glycerides in the fat blend of the invention will predominantly comprise triglycerides (such as greater than 95 % by weight based on total glycerides) but may comprise diglycerides and/or monoglycerides, for example in amounts of less than 5 % by weight, typically less than 2 % by weight, based on total glycerides.

Unless specified otherwise, all percentages of fatty acids used herein refer to fatty acids bound as acyl groups in glycerides and are by weight based on total C8 to C24 fatty acids present in the fat blends and compositions as acyl groups in glycerides. The levels of fatty acids present in the compositions of the invention can be determined by methods well-known to those skilled in the art such as GC-FAME (such as ISO 15304 or AOCS Ce1f-96).

Specific triglyceride composition such as StOO may be determined by GC analysis (ISO 23275). Triolein (OOO) and more general triglyceride composition such as SOO, where S represents saturated C8 to C24 fatty acid, may be determined by Ag-HPLC analysis. In this analysis, a silver nitrate impregnated silica column is used and detection takes place with an evaporative light scattering detector (ELSD).

The percentage of oleic acid residues in the 2- position may be determined by finding: (a) the total oleic content of the fat by FAME (e.g., by AOCS Ce 1f-96); and (b) the oleic content of the 2- position by FAME of a sample of the fat after hydrolysis of the 1- and 3-residues using the Grignard method (according to Becker et al., Lipids, Vol.28, no. 2, 1993). The value is ((b) multiplied by 100) ÷ ((a) multiplied by 3).

Triglyceride fats are often characterized in terms of their fatty acid content and the position of the fatty acids in the triglyceride. Typically, the abbreviation S is used to denote a saturated fatty acid residue and U denotes an unsaturated fatty acid residue. Thus, for example, a pure triglyceride containing three saturated fatty acid residues is denoted SSS (having the same meaning as S3 or S₃) and a triglyceride having saturated fatty acids at the 1 and 3 positions and an unsaturated fatty acid at the 2- position is denoted SUS. S2U (or its equivalent term S₂U) refers to combined SSU and SUS, and SU2 (or SU₂) refers to combined SUU and USU. U3 (or U₃) refers to UUU.

The fat blend of the invention preferably comprises from 2 % to 20 % by weight, more preferably from 4 % to 15 % by weight, such as from 4 to 8 % by weight, StOO (1-stearoyl-2,3-dioleoylglyceride) triglycerides based on total triglycerides present in the fat blend, where St represents stearic acid and O represents oleic acid. Thus, the fat blend may comprise less than 15 % by weight StOO triglycerides based on total triglycerides present in the fat blend, such as less than 10 % by weight StOO triglycerides based on total triglycerides present in the fat blend.

Preferably, the fat blend comprises less than 3 % by weight SSS triglycerides based on total triglycerides in the fat blend, wherein S represents saturated C8 to C24 fatty acid. More preferably, the fat blend comprises less than 2 % by weight, even more preferably less than 1 %, SSS triglycerides based on total triglycerides in the fat blend.

The fat blend of the invention is typically a mixture of one or more stearin fractions of a vegetable oil with one or more liquid oils. The fat blend of the invention preferably comprises, consists essentially of, or consists of, a blend of shea stearin with high oleic sunflower oil. Shea stearin and high oleic sunflower oil are commercially available materials. Shea stearin may be produced by the wet or dry fractionation of sheanut oil, more preferably by wet fractionation.

A preferred fat blend of the invention comprises from 30 to 70 % by weight shea stearin and from 70 to 30 % by weight high oleic sunflower oil. More preferably, the fat blend comprises from 30 to 50 % by weight shea stearin and from 70 to 50 % by weight high oleic sunflower oil. Even more preferably, the fat blend comprises from 35 to 45 % by weight shea stearin and from 65 to 55 % by weight high oleic sunflower oil. The fat blend may comprise shea stearin and high oleic sunflower oil as the sole components. Alternatively, other fat components may also be present, for example in an amount of up to 10 % or up to 20 % by weight of the fat blend.

The fat blends of the invention are typically free of components derived from genetically-modified sources. The fat blends of the invention are from vegetable sources. The fat blends are usually free of *trans* fatty acids, for example they may contain less than 1 %, more typically less than 0.5 %, by weight of *trans* fatty acids based on total fatty acids present.

Preferably, the fat blend comprises more than 76 % by weight, more preferably more than 78 % by weight, even more preferably more than 80 % by weight, such as from 80 % to 90 % by weight, oleic acid at the 2- position of a glyceride based on total C8 to C24 fatty acids present as an acyl group on the 2- position of a glyceride.

The fat blends of the invention preferably comprise C18 fatty acids (including oleic acid, stearic acid and linoleic acid) in an amount of at least 70 % by weight, more preferably at least 80 % by weight or at least 85 % by weight, such as at least 90 % by weight, for example from 92 % to 98 % by weight, based on total fatty acids present in glycerides.

The fat blends of the invention preferably have a content of C8 to C16 fatty acids of less than 10 % by weight, more preferably less than 5 % by weight, even more preferably less than 4 % by weight, based on total fatty acids present in glycerides.

Preferably, the fat blends of the invention have a linoleic acid content of less than 15 % by weight, more preferably from 1 to 10 % by weight, based on total fatty acids present in glycerides.

The fat blends of the invention preferably have a weight ratio of S₂O (i.e., SSO and SOS) triglycerides to S₂L triglycerides (i.e., SSL and SLS) of greater than 5:1, more preferably greater than 7:1, even more preferably greater than 10:1, where S represents saturated C8 to C24 fatty acid, O represents oleic acid and L represents linoleic acid.

The fat blends of the invention preferably have a content of OOO triglyceride (triolein) of from 35 % to 55 % by weight based on total triglycerides.

In a preferred embodiment, the fat blend of the invention comprises more than 76 % by weight oleic acid at the 2- position of a glyceride based on total C8 to C24 fatty acids present as an acyl group on the 2- position of a glyceride, from 10 % to 50 % by weight stearic acid based on total C8 to C24 fatty acids present as acyl groups in glycerides in the blend, less than 15 % by weight linoleic acid based on total C8 to C24 fatty acids present as acyl groups in glycerides in the blend, from 15 % to 45 % by weight SUS triglycerides based on total triglycerides present in the fat blend, where S represents saturated C8 to C24 fatty acid and U represents unsaturated C8 to C24 fatty acid, and less than 25 % by weight StOO triglycerides based on total triglycerides present in the fat blend, wherein St represents stearic acid and O represents oleic acid.

In another preferred embodiment, a fat blend of the invention comprises more than 78 % by weight oleic acid at the 2- position of a glyceride based on total C8 to C24 fatty acids present as an acyl group on the 2- position of a glyceride, C18 fatty acids in an amount of at least 70 % by weight based on total C8 to C24 fatty acids present as acyl groups in glycerides in the blend, a linoleic acid content of from 1 to 10 % by weight based on total fatty acids present in glycerides, from 10 % to 50 % by weight stearic acid based on total C8 to C24 fatty acids present as acyl groups in glycerides in the blend, a weight ratio of S₂O triglycerides to S₂L triglycerides of greater than 5:1 where S represents saturated C8 to C24 fatty acid, O represents oleic acid and L represents linoleic acid, from 15 % to 45 % by weight SUS triglycerides based on total triglycerides present in the fat blend, where S represents saturated C8 to C24 fatty acid and U represents unsaturated C8 to C24 fatty acid, and less than 10 % by weight StOO triglycerides based on total triglycerides present in the fat blend, wherein St represents stearic acid and O represents oleic acid.

The fat blends of the invention may be used in margarines and spreads, including tub, wrapper and bakery margarines.

A margarine or spread according to the invention preferably comprises from 1 to 99 % by weight of a fat blend of the invention and from 1 to 99 % by weight of an aqueous phase.

Margarines typically comprise from about 80 to 90 % by weight fat as a water-in-oil emulsion. Spreads usually have a lower fat content and include fat continuous or water continuous or bicontinuous spreads and fat reduced spreads.

Spreads and margarines may be formed by mixing the fat blend of the invention with an aqueous phase and, typically, an emulsifier. The amounts of vegetable fat and aqueous phase typically range from 10-90 % by weight vegetable fat and 90-10 % by weight aqueous phase, such as from 20-80 % by weight vegetable fat and 80-20 % by weight aqueous phase or from 30-70 % by weight vegetable fat and 70-30 % by weight aqueous phase. Further components of margarines and spreads include one or more of colouring agents (such as beta-carotene), flavouring agents (for example, salt and/or citric acid), preservatives (e.g., potassium sorbate) and emulsifiers (such as lecithin or fully hardened vegetable oil); typically, these components are present in an amount of less than 10 % (such as 0.1 to 6 %) by weight of the spread or margarine. The preparation of spreads and margarines from a vegetable fat and an aqueous phase is well-known to those skilled in the art.

An example of a spread or margarine that may be formed using a fat blend of the invention comprises from 10 to 90 % by weight fat from 10 to 90 % by weight water and from 0.1 to 10 % by weight of additives including one or more of colouring agents, flavouring agents and emulsifiers. It will be appreciated that the total amount of the components adds up to 100 %.

Margarines and spreads formed using the fat blend of the invention have been found to exhibit good textural properties (including relatively low hardness). Margarines and spreads formed using the fat blend of the invention have also been found to exhibit reduced post-hardening.

The margarines and spreads may be packaged, for example in tubs or wrappers.

The fat blends of the invention are typically suitable for use as a bakery fat and may be used as bakery fats. The fat blends may be used as bakery fats in the form of shortening, margarines or spreads. Shortening typically comprises the fat blend in plastified form, made plastic by mechanical treatment and/or by the addition of one or more emulsifiers.

Therefore, the shortening of the invention comprises the fat blend of the invention and, optionally, one or more emulsifiers (such as monoglycerides, diglycerides, PGPR and mixtures thereof). The shortening will usually comprise at least 95 % by weight of the fat blend of the invention, e.g., from 96 to 100 % by weight.

Fat blends of the invention may be used in the production of bakery products. The bakery products preferably have a laminated structure. For example, the fat blends, in the form of shortening, margarine or spread, may be used (or may be suitable for use) as laminating fats for puff pastry, pies or croissants.

Fat blends of the invention, in the form of shortening, margarine or spread, may be used to form a dough. The dough comprises at least flour and water and preferably comprises flour in an amount of from 30 to 60 % by weight, water in an amount of from 10 to 40% by weight and the fat blend of the invention in an amount of from 10 to 50% by weight based on the weight of the dough. Optionally, one or more further ingredients such as salt, flour modifier and emulsifier may be included in the dough.

The bakery products of the invention are made from dough. The dough preferably has a laminated structure. The bakery products include, for example, puff pastry, croissants, Danish pastries and pies.

The bakery products prepared according to the invention comprise the fat blend of the invention, preferably as a laminating fat. The dough that is used to produce the bakery product of the invention may comprise the fat blend (in the form of shortening, margarine or spread) as shortening and as a laminating fat. Alternatively, the dough may have been prepared using a fat other than the fat blend of the invention as shortening in the dough but the fat blend of the invention is used as a laminating fat (in the form of shortening, margarine or spread). A laminated dough may be prepared, for instance, by a method that comprises applying the fat blend of the invention (in the form of shortening, margarine or spread) to a plurality of layers of the dough to form a product in which layers of dough alternate with layers of the fat blend of the invention. Typically, the method comprises applying the fat blend of the invention to the dough, in the form of a shortening, margarine or spread, folding the dough and rolling the folded dough.

The doughs comprising the fat blend of the invention, as a laminating fat and/or as shortening, may be refrigerated, frozen or otherwise stored prior to use. The frozen dough may be packaged and sold to the consumer.

In order to form a bakery product of the invention, the laminated dough is baked, preferably in an oven. Suitable times and temperatures for baking specific bakery products will be well-known to those skilled in the art.

Baked products produced using the fat blends of the invention have been found to impart good structure to pastry. For instance, the fat blends of the invention can increase the height of laminated products (such as puff pastry) and/or improve the structure of the pastry in the region of crimping.

It will be appreciated that in the fat blends, margarines, spreads, shortenings, doughs and bakery products of the invention, the percentage values of the various components, together with other optional components not explicitly stated, if present, will total 100%.

The listing or discussion of an apparently prior-published document in this specification should not necessarily be taken as an acknowledgement that the document is part of the state of the art or is common general knowledge.

Preferences and options for a given aspect, embodiment, feature or parameter of the invention should, unless the context indicates otherwise, be regarded as having been disclosed in combination with any and all preferences and options for all other aspects, embodiments, features and parameters of the invention. For example, the preferred features of the fat blend may be applied when the fat blend is used in the margarines, spreads and shortenings of the invention.

The following non-limiting examples illustrate the invention and do not limit its scope in any way. In the examples and throughout this specification, all percentages, parts and ratios are by weight unless indicated otherwise.

### EXAMPLES

### Example 1

A fat blend was prepared by blending 40 % by weight shea stearin (SHs) and 60 % by weight high oleic sunflower oil (HOSF). The blend was analysed and the results compared to a blend of 60 % SHs with 40 % HOSF (Comparative Example 1-2), a blend of 60 % SHs with 40 % sunflower oil (SF) (Comparative Example 1-3) and a blend of 50 % SHs with 50 % SF (comparative Example 1-4). The results are set out in the following table.

| **Fat blend** | **Example 1-1 Fat blend of the invention** | **Example 1-2 Comparative example** | **Example 1-3 Comparative example** | **Example 1-4 Comparative example** |
|---|---|---|---|---|
| SHs | 40 | 60 | 60 | 50 |
| HOSF | 60 | 40 | | |
| SF | | | 40 | 50 |
| **Analyses** | | | | |
| C18:1 in Sn-2 (based on total FAME of 2-position) | 82.7 | 81.9 | * | * |
| **Triglyceride analysis (HPLC Silverphase method)** | | | | |
| SOS | 30.0 | 46.8 | 49.7 | 44.1 |
| SOO | 8.6 | 7.6 | 3.1 | 3.1 |
| OSO | 0.1 | 0.0 | 0.1 | 0.1 |
| SSS | 0.7 | 1.3 | 1.6 | 1.2 |
| SLS | 1.9 | 4.1 | 5.6 | 4.6 |
| SSL | 1.2 | 0.9 | 0.0 | 0.1 |
| SOL | 1.2 | 1.1 | 4.6 | 5.8 |
| OOO | 49.4 | 32.8 | 4.2 | 5.1 |
| 3plus (>3 double bonds) | 6.8 | 5.1 | 30.9 | 35.6 |
| SSO | 0.2 | 0.4 | 0.3 | 0.4 |
| **FAME analysis (GC)** | | | | |
| C8:0 | 0.0 | 0.0 | 0.0 | 0.0 |
| C10:0 | 0.0 | 0.0 | 0.0 | 0.0 |
| C12:0 | 0.0 | 0.0 | 0.0 | 0.0 |
| C15:0 | 0.0 | 0.0 | 0.0 | 0.0 |
| C14:0 | 0.0 | 0.0 | 0.0 | 0.1 |
| C16:0 | 3.5 | 3.4 | 4.5 | 4.9 |
| C16:1c | 0.1 | 0.1 | 0.1 | 0.1 |
| C17:0 | 0.0 | 0.1 | 0.1 | 0.0 |
| C18:0 | 26.3 | 38.0 | 38.0 | 32.2 |
| C18:1 | 61.8 | 51.4 | 30.7 | 30.7 |
| C18:1t | 0.0 | 0.0 | 0.0 | 0.0 |
| C18:1c | 61.8 | 51.4 | 30.6 | 30.6 |
| C18:2 | 6.0 | 4.9 | 24.6 | 30.1 |
| C18:2t | 0.1 | 0.1 | 0.2 | 0.3 |
| C18:2c | 6.0 | 4.8 | 24.4 | 29.8 |
| C18:3 | 0.1 | 0.1 | 0.1 | 0.1 |
| C18:3c | 0.1 | 0.1 | 0.1 | 0.1 |
| TTrans | 0.1 | 0.1 | 0.2 | 1.0 |
| C20:0 | 0.9 | 1.2 | 1.2 | 0.1 |
| C20:1c | 0.2 | 0.1 | 0.1 | 0.0 |
| C20:2c | 0.0 | 0.0 | 0.0 | 0.5 |
| C22:0 | 0.7 | 0.5 | 0.4 | 0.0 |
| C24:0 | 0.2 | 0.2 | 0.2 | 0.0 |
| SAFA | 31.7 | 43.4 | 44.4 | 38.8 |
| MUFA | 62.1 | 51.6 | 30.8 | 30.9 |
| PUFA | 6.1 | 5.0 | 24.7 | 30.1 |
| IVFAME | 64.1 | 53.0 | 69.3 | 36.9 |
| Others | 0.1 | 0.1 | 0.1 | 0.3 |
| **Triglyceride analysis (GC-method)** | | | | |
| POO | 5.9 | 3.8 | 1.2 | 1.5 |
| StOO | 5.8 | 4.7 | 2.0 | 2.0 |

In the above table, IVFAME refers to calculated iodine value and Cx:y refers to a fatty acid having x carbon atoms and y double bonds. c refers to cis fatty acids and t to trans fatty acids. TTrans means total trans. Fatty acid abbreviations M (myristic), P (palmitic), St (stearic), O (oleic), L (linoleic) and A (arachidic), etc are as normally used in the art. S is as defined above. SAFA, MUFA and PUFA refer to saturated, monounsaturated and polyunsaturated fatty acid contents, respectively.

### Example 2

Margarines (80 % fat) were prepared from using the fat blends of Examples 1-1 to 1-4 and a palm-based fat (Comparative Example 1-5). The formulations were as follows:

| **Recipe margarines** | Example 2-1 | Example 2-2 | Example 2-3 | Example 2-4 | Example 2-5 |
|---|---|---|---|---|---|
| **Fat phase** | Example 1-1 | Example 1-2 | Example 1-3 | Example 1-4 | Example 1-5 |
| SHs | 1200 | 1800 | 1800 | 1500 | |
| HOSF | 1800 | 1200 | | | |
| RP (rapeseed oil) | | | | | 750 |
| SF | | | 1200 | 1500 | |
| PO (palm oil) | | | | | 750 |
| POs (palm oil stearin) | | | | | 1500 |
| total | 3000 | 3000 | 3000 | 3000 | 3000 |
| Admul MBR | 6 | 6 | 6 | 6 | 6 |
| Total | 3006 | 3006 | 3006 | 3006 | 3006 |
| **Water phase** | | | | | |
| NaCl | 2.3 | 2.3 | 2.3 | 2.3 | 2.3 |
| Citric acid | 1.3 | 1.3 | 1.3 | 1.3 | 1.3 |
| Potassium sorbate | 1.4 | 1.4 | 1.4 | 1.4 | 1.4 |
| Water | 746.5 | 746.5 | 746.5 | 746.5 | 746.5 |
| total | 5 | 5 | 5 | 5 | 5 |
| **Total** | 3752.5 | 3752.5 | 3752.5 | 3752.5 | 3752.5 |

The margarine was processed through a conventional A,C sequence with a throughput of 8.4 kg/h, an exit temperature on the A-unit (1400 rpm) of 20°C, an exit temperature on the C-unit (100 rpm) of 24°C. The line pressure varied from 2 to 6.3 bar. The margarines are stored at 18°C after production. The following table sets out the process conditions.

| **Process conditions** | 2-1 | 2-2 | 2-3 | 2-4 | 2-5 |
|---|---|---|---|---|---|
| Power Pump (Hz) | 14 | 14 | 14 | 14 | 14 |
| Rezones time Pilot (min) | 1 | 1 | 1 | 1 | 1 |
| Pressure (bar) | 4 | 3 | 2 | 2.3 | 6.3 |
| T. emulsion (°C) | 55 | 55 | 55 | 55 | 55 |
| Perfector 1 (rpm) | 1400 | 1400 | 1400 | 1400 | 1400 |
| Outcome temp Perfector 1 (°C) | 20 | 20 | 20 | 20 | 20 |
| Throughput kg/h | 8.4 | 8.4 | 8.4 | 8.4 | |
| | | | | | |
| Cooling Perfector 1 (°C) | 4 | 4 | 4 | 4 | 4 |
| Pin worker (rpm) | 100 | 100 | 100 | 700 | 700 |
| Temp Pin worker (°C) | 24 | 24 | 24 | 24 | 24 |
| Resting tube | None | None | None | None | None |
| Configuration | A,C | A,C | A,C | A,C | A,C |

### Example 3

The margarines produced in Example 2 were tested for their relative hardness. The results are given in the following table.

| Hardness | 5 days after production | 2 weeks after production | 3 weeks after production | 9 weeks after production |
|---|---|---|---|---|
| Margarine 2-1 Blend 1-1 SHs/HOSF 40/60 | 408 | 418 | 424 | 401 |
| Margarine 2-2 Blend 1-2 SHs/HOSF 60/40 | 1200 | 1200 | 1200 | 1200 |
| Margarine 2-3 Blend 1-3 SHs/SF 60/40 | 1200 | 1200 | 1200 | 1200 |
| Margarine 2-4 Blend 1-4 SHs/SF 50/50 | 1016 | 1116 | 1044 | 1000 |
| Margarine 2-5 Blend 1-5 RP/PO/Pos 25/25/50 | 251 | 239 | 282 | 391 |

The hardness was measured with a Brookfield TexturePro CT TA40 V1.5 as follows:

| |
|---|
| Probe: Cylinder 4.5 mm/ 20 mm long. |
| Depth: 2 mm |
| Speed: 0.5 m/s |
| max load 1100 gr. |

The results show that the margarine according to the invention exhibited good softness compared to Comparative Examples 2-2 to 2-4 without the post-hardening effect seen in Comparative Example 2-5.

### Example 4

A puff pastry was prepared by mixing 375 g fat blend (Fat blends of Examples 1-1 to 1-5) with 500 g patent flour, 260 g water, 5 g salt. The kneading was performed at 200 rpm slow and 1400 rpm fast.

Rolling decrease in mm 30-25-22-20-18-16-14-12-0. Baking was done at 200°C for 32 minutes.

| Baking results | Blend of Example 1-1 | Blend of Example 1-2 | Blend of Example 1-3 | Blend of Example 1-4 | Example 1-5 Palm based |
|---|---|---|---|---|---|
| Weight before baking (g) | 462.5 | 435.6 | 439.8 | 450.8 | 448.6 |
| Weight after baking (g) | 340.9 | 315.3 | 315.5 | 342.5 | 334.9 |
| Baking loss (%) | 26.3 | 27.6 | 28.3 | 24.0 | 25.3 |
| | | | | | |
| **After baking** | | | | | |
| Average Height in (mm) (n = 4) | 32.0 | 13.0 | 11.3 | 29.3 | 43.3 |
| | | | | | |
| **Crimp top** | | | | | |
| Average width | 18.5 | 6.5 | 9.3 | 14.3 | 21.0 |
| (mm) (n = 4) | | | | | |

The results show that the fat blend of the invention produces puff pastry that has good height and width of the crimp compared to the non-palm Comparative Examples 2 to 4.

The following numbered paragraphs are also disclosed herein.

Paragraph 1. Fat blend comprising more than 75 % by weight oleic acid at the 2- position of a glyceride based on total C8 to C24 fatty acids present as an acyl group on the 2-position of a glyceride, from 10 % to 50 % by weight stearic acid based on total C8 to C24 fatty acids present as acyl groups in glycerides in the blend, from 15 % to 45 % by weight SUS triglycerides based on total triglycerides present in the fat blend, where S represents saturated C8 to C24 fatty acid and U represents unsaturated C8 to C24 fatty acid, and less than 25 % by weight StOO triglycerides based on total triglycerides present in the fat blend, wherein St represents stearic acid and O represents oleic acid.

Paragraph 2. Fat blend as claimed in paragraph 1 comprising from 2 % to 20 % by weight StOO triglycerides based on total triglycerides present in the fat blend, preferably from 4 % to 15 % by weight StOO triglycerides based on total triglycerides present in the fat blend.

Paragraph 3. Fat blend as claimed in any one of the preceding paragraphs comprising less than 15 % by weight StOO triglycerides based on total triglycerides present in the fat blend, preferably less than 10 % by weight StOO triglycerides based on total triglycerides present in the fat blend.

Paragraph 4. Fat blend as claimed in any one of the preceding paragraphs comprising less than 3 % by weight SSS triglycerides based on total triglycerides in the fat blend, wherein S is as defined in Claim 1.

Paragraph 5. Fat blend as claimed in any one of the preceding paragraphs which comprises, or consists of, a blend of shea stearin with high oleic sunflower oil.

Paragraph 6. Fat blend as claimed in any one of the preceding paragraphs which comprises from 30 to 70 % by weight shea stearin and from 70 to 30 % by weight high oleic sunflower oil.

Paragraph 7. Fat blend as claimed in any one of the preceding paragraphs which is free of components derived from genetically-modified sources.

Paragraph 8. Fat blend as claimed in any one of the preceding paragraphs comprising more than 78 % by weight oleic acid at the 2- position of a glyceride based on total C8 to C24 fatty acids present as an acyl group on the 2- position of a glyceride.

Paragraph 9. Process for making the fat blend of any one of paragraphs 1 to 8 which comprises mixing shea stearin and high oleic sunflower oil.

Paragraph 10. Use of the fat blend of any one of paragraphs 1 to 8 to prepare a margarine or spread.

Paragraph 11. Use of the fat blend of any one of paragraphs 1 to 8 as a shortening.

Paragraph 12. Method of making a margarine or spread comprising mixing a fat blend of any one of paragraphs 1 to 8 with an aqueous liquid.

Paragraph 13. Margarine or spread comprising from 1 to 99 % by weight of a fat phase comprising the fat blend of any one of paragraphs 1 to 8 and from 1 to 99 % by weight of an aqueous phase.

Paragraph 14. Dough comprising the fat blend of any one of paragraphs 1 to 8.

Paragraph 15. Baked product prepared from the dough of paragraph 14.

## Claims

1. Fat blend comprising more than 75 % by weight oleic acid at the 2- position of a glyceride based on total C8 to C24 fatty acids present as an acyl group on the 2- position of a glyceride,
from 10 % to 50 % by weight stearic acid based on total C8 to C24 fatty acids present as acyl groups in glycerides in the blend,
from 15 % to 45 % by weight SUS triglycerides based on total triglycerides present in the fat blend, where S represents saturated C8 to C24 fatty acid and U represents unsaturated C8 to C24 fatty acid,
less than 25 % by weight StOO triglycerides based on total triglycerides present in the fat blend, wherein St represents stearic acid and O represents oleic acid,
wherein the fat blend has less than 15% linoleic acid by weight, based on the total fatty acids present in glycerides.

2. Fat blend according to claim 1, wherein the blend comprises C18 fatty acids, including oleic acid, stearic acid and linoleic acid, in an amount of at least 70% by weight.

3. Fat blend according to claim 1 or 2, wherein the amount of C18 fatty acids is at least 80% by weight, preferably at least 85% by weight, more preferably at least 90% by weight, based on the total fatty acids present in glycerides.

4. Fat blend according to claim 1 or 2, wherein the fat blend has a content of C8 to C16 fatty acids of less than 10% by weight based on the total fatty acids present in glycerides, preferably less than 5% by weight, more preferably less than 4%.

5. Fat blend according to any of the preceding claims, wherein the fat blend has a weight ratio of S₂O triglycerides to S₂L triglycerides of greater than 5:1, where S represents saturated C8 to C24 fatty acids, O represents oleic acid and L represents linoleic acid.

6. Fat blend according to claim 5, wherein the weight ratio of S₂O triglycerides to S₂L triglycerides is greater than 7:1, preferably greater than 10:1.

7. Fat blend as claimed in Claim 1 comprising from 2 % to 20 % by weight StOO triglycerides based on total triglycerides present in the fat blend, preferably from 4 % to 15 % by weight StOO triglycerides based on total triglycerides present in the fat blend, more preferably from 4 % to 10 % by weight StOO triglycerides based on total triglycerides present in the fat blend.

8. Fat blend as claimed in any one of the preceding claims comprising less than 3 % by weight SSS triglycerides based on total triglycerides in the fat blend, wherein S is as defined in Claim 1, preferably less than 1% SSS triglycerides.

9. Fat blend as claimed in any one of the preceding claims, which comprises, or consists of, a blend of shea stearin with high oleic sunflower oil, preferably from 30 to 70 % by weight shea stearin and from 70 to 30 % by weight high oleic sunflower oil, more preferably from 30 to 50% by weight shea stearin and from 70 to 50% by weight high oleic sunflower oil.

10. Fat blend according to claim 9, wherein the fat blend consists of shea stearin and high oleic sunflower oil and up to 20% of other fat components, preferably up to 10%.

11. Fat blend according to any of the preceding claims, wherein the fat blend contains less than 1% of trans fatty acids based on the total fatty acids, preferably less than 0.5%.

12. Process for making the fat blend of any one of Claims 1 to 11, wherein the process comprises the mixing shea stearin and high oleic sunflower oil.

13. Use of the fat blend of any one of Claims 1 to 11 as a bakery fat.

14. Use according to claim 13, wherein the bakery fat is a margarine, a shortening or a spread.

15. Use of the fat blend according to claim 13 or 14, wherein the fat is used as a laminating fat for puff pastry, pies or croissants.
